# EUROPÄISCHE PATENTSCHRIFT

(11) **EP 4 274 767 B1**
(45) Veröffentlichungstag und Bekanntmachung des Hinweises auf die Patenterteilung: **26.11.2025**
(21) Anmeldenummer: 22701300.0
(22) Anmeldetag: 10.01.2022
(51) Int. Cl.: B60R 22/40

(54) **FAHRZEUGSENSITIVER SENSOR FÜR EINEN SELBSTSPERRENDEN GURTAUFROLLER**
VEHICLE-SENSITIVE SENSOR FOR A SELF-LOCKING BELT RETRACTOR
CAPTEUR SENSIBLE AU VÉHICULE POUR UN ENROULEUR DE CEINTURE AUTOBLOQUANT

(30) Priorität: 11.01.2021 DE 102021100322
(43) Veröffentlichungstag der Anmeldung: 15.11.2023
(73) Patentinhaber: Autoliv Development AB, 447 83 Vårgårda (SE)
(72) Erfinder: SCHWARTZ, Marcus, 25421 Pinneberg (DE); HUEG, Markus, 20259 Hamburg (DE)
(74) Vertreter: Feucker, Max Martin
(86) Internationale Anmeldenummer: PCT/EP2022/050338
(87) Internationale Veröffentlichungsnummer: WO 2022/148863

(56) Entgegenhaltungen:
- DE-A1- 102015 017 201

## Beschreibung

Die vorliegende Erfindung betrifft einen fahrzeugsensitiven Sensor für einen selbstsperrenden Gurtaufroller, umfassend ein Trägerteil, eine auf einer Aufstandsfläche des Trägerteils stehend angeordnete und zu dem Trägerteil kippbare Sensormasse und einen mit der Sensormasse gekoppelten, eine Eingriffsspitze aufweisenden Sperrhebel, wobei der Sperrhebel wenigstens zwei Rotationselemente zur Ausbildung einer Rotationsachse für den Sperrhebel aufweist und wobei jedes Rotationselement auf einer zugehörigen Auflagestelle des Trägerteils aufliegt. Die Erfindung betrifft zudem einen selbstsperrenden Gurtaufroller mit einem fahrzeugsensitiven Sensor.

Ein Sensor mit den vorgenannten Merkmalen ist beispielsweise aus EP 3 459 797 B1 bekannt. Ein solcher Sensor wird in einem Blockiersystem für eine Gurtaufwickelwelle eines selbstsperrenden Gurtaufrollers eingesetzt, wobei im Auslösefall die fahrzeugsensitiv gelagerte Sensormasse den Sperrhebel mit einer Eingriffsspitze in Eingriff mit einer Verzahnung einer Steuerscheibe bewegt, sodass die Steuerscheibe in ihrer gemeinsamen Drehbewegung mit der Gurtaufwickelwelle angehalten und dadurch das Blockiersystem aktiviert wird.

Es hat sich nun herausgestellt, dass sich der Sperrhebel trotzt schon bekannter Gegenmaßnahmen in Aufprallsituationen aus seiner, eine Rotationsbewegung ermöglichenden Halterung löst. Insbesondere bei hohen Temperaturen wurde beobachtet, dass der Sperrhebel sich aus seinen vorhergesehenen Stellungen löst und/oder in seiner Rotationsbewegung gehemmt wird, sodass die Aktivierung des Blockiersystems nicht sichergestellt ist.

Aufgabe der vorliegenden Erfindung ist es daher, die mit Bezug zum Stand der Technik geschilderten Nachteile zumindest teilweise zu lösen und insbesondere einen fahrzeugsensitiven Sensor anzugeben, dessen Robustheit gegen Fehlfunktionen erhöht ist.

Eine mögliche Lösung dieser einen Aufgabe wird durch einen fahrzeugsensitiven Sensor mit den Merkmalen des unabhängigen Anspruchs 1 angegeben. Mögliche weitere Lösungen und vorteilhafte Weiterbildungen des Sensors sind in den abhängigen Ansprüchen und in der Beschreibung angegeben, wobei einzelne Merkmale aus den abhängigen Ansprüchen und der Beschreibung in technisch sinnvoller Weise miteinander kombinierbar sind.

Der fahrzeugsensitive Sensor umfasst insbesondere ein Trägerteil, eine Sensormasse und einen Sperrhebel.

Im bestimmungsgemäß eingebauten Normalzustand ist die Sensormasse insbesondere stehend auf einer Aufstandsfläche des Trägerteils angeordnet und zu dem Trägerteil kippbar.

Der Sperrhebel ist mit der Sensormasse gekoppelt, insbesondere indem der Sperrhebel die einteilig, zweiteilig oder mehrteilig ausgeführte Sensormasse durchgreift, wobei bevorzugt eine Kontaktstelle zwischen dem die Sensormasse durchgreifenden Abschnitt des Sperrhebels und der Sensormasse mittels mindestens einer Erhöhung realisiert ist.

Der Sperrhebel weist zudem eine Eingriffsspitze auf, die insbesondere dem die Sensormasse durchgreifenden Abschnitt gegenüberliegt. Der Sperrhebel und gegebenenfalls die Sensormasse können insbesondere in dem sich berührenden Bereich so ausgebildet sein, dass der Sperrhebel bei einer Kippbewegung der Sensormasse eine Rotationsbewegung ausführt. Zusätzlich zu der Rotationsbewegung kann aber auch die durch die Rotationsbewegung definierte Rotationsachse linear verschoben werden.

Zur Ausbildung einer Rotationsachse kann der Sperrhebel mindestens zwei, bevorzugt genau zwei Rotationselemente aufweisen. Die Rotationselemente sind insbesondere an zwei seitlichen Enden des Sperrhebels ausgebildet.

In dem bestimmungsgemäß eingebauten Normalzustand liegen die Rotationselemente jeweils auf einer durch das Trägerteil ausgebildeten Auflagestelle auf. Bevorzugt weisen die Rotationselemente auf ihrer Unterseite eine abgerundete Außenumfangsgestaltung auf, über die der Sperrhebel während der durch die kippende Sensormasse ausgelöste Rotationsbewegung ausgehend von der Auflagestelle abrollt.

In einer Ausführungsform wird nun vorgeschlagen, dass das Trägerteil eine Ausnehmung für jedes Rotationselement aufweist und dass ein Boden der Ausnehmung die Auflagestelle für ein Rotationselement ausbildet. Es wird ferner vorgeschlagen, dass der Boden von einer Decke der jeweiligen Ausnehmung zumindest teilweise, bevorzugt vollständig und somit im montierten Normalzustand zumindest auch das Rotationselement von einer Decke der jeweiligen Ausnehmung zumindest teilweise, bevorzugt vollständig überdeckt ist. Somit wird sichergestellt, dass auch in Aufprallsituationen sich das Rotationselement nicht um eine undefinierte Strecke von dem Boden abhebt. Vielmehr wird sichergestellt, dass das Rotationselement bei einer Abhebebewegung von dem Boden an die Decke der Ausnehmung stößt und somit an seiner vorgesehenen Stelle verbleibt.

Bevorzugt sind genau zwei Ausnehmungen an seitlichen Bereichen des Trägerteils für die genau zwei Rotationselemente des Sperrhebels ausgebildet. Jede, ein Rotationselement aufnehmende Ausnehmung weist also einen Boden und einen diesen Boden zumindest im Bereich des Rotationselements überdeckende Decke auf.

Die Ausnehmung kann zudem eine Öffnung aufweisen, durch die das jeweilige Rotationselement in die Ausnehmung einbringbar/einschiebbar ist.

Eine solche Öffnung ist insbesondere auf einer Vorderseite des Trägerteils, also auf einer der Aufstandsfläche und der Sensormasse abgewandten Seite angeordnet. Somit kann der Sperrhebel bei einer Montage zum einen mit seinem entsprechenden Abschnitt in die Sensormasse eingeschoben werden und dabei mit den Rotationselementen durch die Öffnungen in die Ausnehmungen eingeführt werden.

Um zu verhindern, dass der Sperrhebel bei einer entsprechenden Ausrichtung des Sensors wieder aus der Ausnehmung durch die Öffnung herausfällt, kann die Decke der Ausnehmung einen nach unten vorstehenden Vorsprung aufweisen. Der Vorsprung kann insbesondere so ausgebildet sein, dass das im Querschnitt insbesondere nicht kreisrunde Rotationselement nicht in jeder beliebigen Ausrichtung durch die Öffnung in die Ausnehmung eingesetzt werden kann.

Alternativ kann vorgesehen sein, dass der Vorsprung und das Rotationselement so aufeinander abgestimmt sind, dass der Sperrhebel mit dem Rotationselement nur mit einem gewissen Druck durch die Öffnung in die Ausnehmung einsetzbar ist, sodass das Rotationselement nicht einfach aus der Ausnehmung herausfallen kann. Während des Einsetzens könnte sich der Vorsprung/das Trägerteil beispielsweise elastisch verformen.

Der Vorsprung kann aber auch zusätzlich oder alternativ eine weitere Funktion aufweisen. So kann der Vorsprung so ausgebildet und angeordnet sein, dass eine (Rotations-)Bewegung des Rotationselements begrenzt wird, indem das Rotationselement während seiner durch die Sensormasse ausgelösten Bewegung mit dem Vorsprung in Kontakt kommt. Somit wird aber auch durch den Vorsprung ein maximaler Auslenkwinkel der Eingriffsspitze des Sperrhebels vorgegeben.

Um das Einsetzen des Sperrhebels in das Trägerteil zu vereinfachen, kann vorgesehen sein, dass sich die Öffnung zum Boden der Ausnehmung hin verengt. Während also der Boden der Ausnehmung in einem bestimmungsgemäßen Normalzustand waagerecht ausgerichtet ist, fällt die Öffnung vom Ende des Bodens hin nach vorne ab.

In Kombination mit einem Vorsprung an der Decke der Ausnehmung kann vorgesehen sein, dass ein Übergang von der sich verjüngenden Öffnung zum Boden der Ausnehmung in einer Einbringungsrichtung des Rotationselements hinter dem Vorsprung angeordnet ist. Insbesondere wenn das Rotationselement eine nicht kreisrunde Außenumfangsgestaltung aufweist, wird dadurch ermöglicht, dass das Rotationselement in einer Montageausrichtung durch die Öffnung in die Ausnehmung einbringbar ist und durch eine Rotation in der Ausnehmung in den bestimmungsgemäßen Normalzustand bringbar ist, wobei durch den Vorsprung verhindert wird, dass das Rotationselement durch eine lineare Bewegung aus der Ausnehmung herausgelangt, wobei der Vorsprung gleichzeitig eine Rotationsbewegung des Sperrhebels begrenzen kann. Durch die Kopplung mit der Sensormasse kann zudem verhindert werden, dass der Sperrhebel in die Stellung der Montageausrichtung zurückgelangt und somit das Rotationselement unbeabsichtigt aus der Ausnehmung herausgelangt.

Um die Rotationsbewegung des Sperrhebels zusätzlich oder alternativ zu begrenzen, kann vorgesehen sein, dass jeder Ausnehmung ein nach vorne vorspringendes Anschlagselement zugeordnet ist. Das Anschlagselement ist jeweils auf der Vorderseite des Trägerelements ausgebildet (und erstreckt sich somit in Richtung der Eingriffsspitze des Sperrhebels). Insbesondere ist dieses Anschlagselement relativ zu der Ausnehmung nach Innen versetzt angeordnet. Das Anschlagselement kann zudem unmittelbar unterhalb der sich verjüngenden Öffnung angeordnet sein.

In diesem Zusammenhang kann vorgesehen sein, dass der Sperrhebel in einem Bereich zwischen den Rotationselementen und der Eingriffsspitze bevorzugt nach unten vorspringende Ausstülpungen aufweist, die jeweils einem Anschlagselement zugeordnet sind. Bei einer durch die Kippbewegung der Sensormasse ausgelösten Rotationsbewegung des Sperrhebels gelangt also die Ausstülpung an dem Sperrhebel in Anlage mit dem Anschlagselement an dem Trägerteil. Die Ausstülpungen sind insbesondere ausgehend von den außen an dem Sperrhebel angeordneten Rotationselementen nach innen und hin zu der Eingriffsspitze versetzt angeordnet.

Zur Ausbildung einer nicht kreisrunden Außenumfangsgestaltung, kann die Außenumfangsgestaltung der Rotationselemente ovalförmig sein. Demgemäß weisen die Rotationselemente in der bestimmungsgemäßen Normalausrichtung sowohl an der Oberseite als auch an der Unterseite konvex geformte Krümmungen auf, während die seitlichen Ränder dazwischen geradlinig und vertikal verlaufen.

Zum Abrollen während der Rotationsbewegung des Sperrhebels kann das Rotationselement auf seiner Unterseite eine symmetrische (insbesondere teilkreisförmige) Krümmungsgestaltung aufweisen. In einer bevorzugten Ausführungsform kann aber auch vorgesehen sein, dass das Rotationselement auf seiner Unterseite eine asymmetrische Krümmung aufweist. In diesem Fall ist die Krümmung ausgehend von dem Auflagepunkt in der Normalstellung in Richtung zur Vorderseite und somit in Richtung der Abrollbewegung des Sperrhebels aus der Normalstellung eine andere als in Richtung der Rückseite. Eine solche unterschiedliche Krümmung kann auch dazu ausgebildet sein, um den Sperrhebel mit den Rotationselementen in der Montageausrichtung durch die Öffnung in die Ausnehmung einzuführen und dort in die Normalstellung zu verschwenken, wodurch der Sperrhebel gegen ein unbeabsichtigtes Herausfallen gesichert ist.

Die Erfindung sowie das technische Umfeld werden im Folgenden anhand der Figuren beispielhaft erläutert. Es zeigen schematisch
- Figur 1:: eine Perspektivansicht eines fahrzeugsensitiven Sensors,
- Figur 2:: eine Explosionsansicht des Sensors,
- Figur 3:: eine Seitenansicht eines Trägerteils des Sensors,
- Figur 4:: eine Seitenansicht eines Sperrhebels des Sensors,
- Figur 5:: eine Seitenansicht des Sensors in einer Normalstellung,
- Figur 6:: die Seitenansicht mit einem rotierten Sperrhebel,
- Figur 7:: eine Schnittansicht durch das Trägerteil und den Sperrhebel im rotierten Zustand,
- Figur 8:: eine Detailansicht der Figur 7,
- Figur 9:: eine Detailansicht der Seitenansicht des Sensors in der Normalstellung und
- Figur 10:: die Detailansicht gemäß Figur 9 bei rotiertem Sperrhebel.

Der in den Figuren dargestellte fahrzeugsensitive Sensor umfasst ein Trägerteil 1, eine Sensormasse 2 und einen Sperrhebel 3.

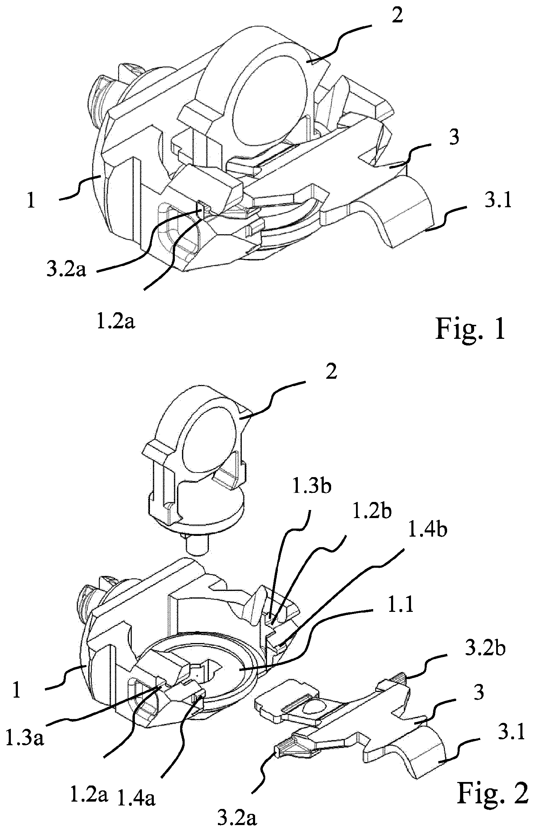

Das Trägerteil 1 umfasst eine Aufstandsfläche 1.1 (siehe Figur 2), auf der die Sensormasse 2 aufsteht und zu der die Sensormasse 2 kippbar angeordnet ist.

Der Sperrhebel 3 umfasst eine Eingriffsspitze 3.1 und auf der der Eingriffsspitze 3.1 gegenüberliegenden Seite einen Abschnitt, der im montierten Zustand durch die Sensormasse 2 (siehe Figur 1) hindurchgreift. An seinen seitlichen Rändern umfasst der Sperrhebel 3 Rotationselement 3.2a und 3.2b. Zudem umfasst der Sperrhebel auf seiner Unterseite benachbart zu den Rotationselement 3.2a und 3.2b Ausstülpungen 3.3a und 3.3b.

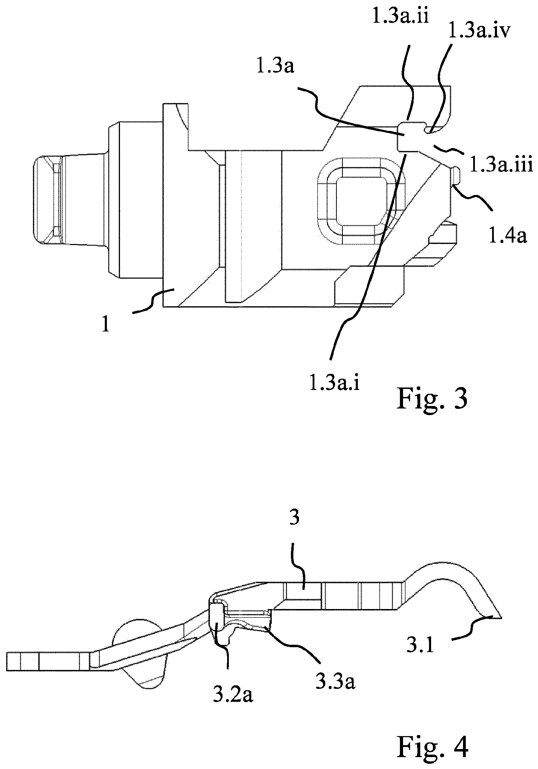

Das Trägerteil 1 weist in seinen seitlichen Bereichen Ausnehmungen 1.3a und 1.3b auf, die jeweils mit ihren Böden eine Auflagestelle 1.2a und 1.2b für die Rotationselemente 3.2a und 3.2b des Sperrhebels 3 ausbilden. Wie insbesondere aus der Figur 3 hervorgeht, weist die Ausnehmung 1.3a neben dem Boden 1.3a.i eine Decke 1.3a.ii auf, die den Boden 1.3a.i überdeckt. Die Ausnehmung 1.3a weist zudem eine Öffnung 1.3a.iii an ihrer Vorderseite auf. Die Öffnung 1.3a.iii ist so ausgebildet, dass sie sich von der Vorderseite hin zu der Ausnehmung 1.3a verjüngt. Zudem weist die Ausnehmung 1.3a an ihrer Decke 1.3a.ii einen nach unten vorspringenden Vorsprung 1.3a.iv auf.

An der Vorderseite des Trägerteils 1 sind zudem zwei Anschlagselemente 1.4a und 1.4b angeordnet, die bezüglich der Ausnehmungen 1.3a und 1.3b nach innen versetzt an der Vorderseite angeordnet sind.

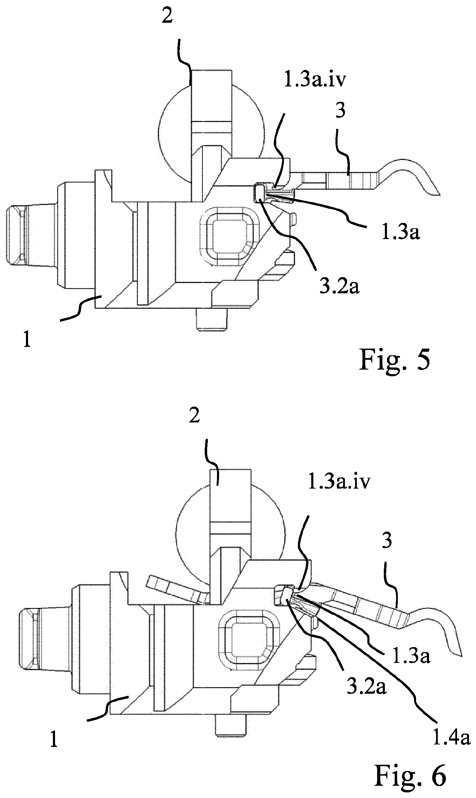

Die Öffnung 1.3a.iii und der Vorsprung 1.3a.iv sind so ausgebildet, dass das zugehörigen Rotationselement 3.2a des Sperrhebels 3 nur in einer gewissen Ausrichtung in die Ausnehmung 1.3 hineingeführt werden kann. Danach wird der Sperrhebel 3 so ausgerichtet, dass er sich in der in Figur 5 dargestellten Normalstellung befindet. Aus Figur 5 ist auch zu erkennen, dass der Sperrhebel 3 nicht durch eine einfache lineare Bewegung zu der Vorderseite (in Figur 5 also nach rechts) aus der Ausnehmung 1.3a herausgelangen kann, da er an den Vorsprung 1.3a.iv anstoßen würde.

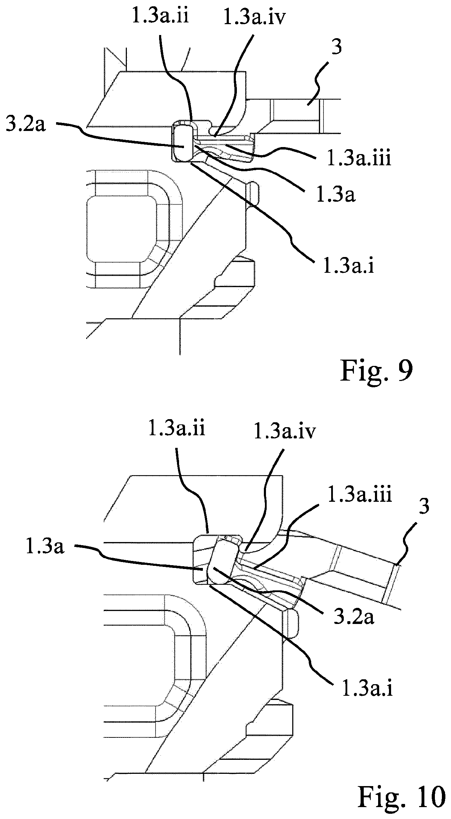

Die Normalstellung ist auch in Figur 9 im Detail gezeigt. Hier ist zu erkennen, dass der Boden 1.3a.i der Ausnehmung 1.3a von der Decke 1.3a.ii überdeckt wird und dass der Vorsprung 1.3a.iv so weit nach unten vorspringt, dass er mit dem in seiner Außenumfangsgestaltung nicht kreisförmig geformten Rotationselement 3.2a überlappt.

In den Figuren 6 und 10 ist der Sperrhebel 3 in einer rotierten Stellung dargestellt. Es ist zu erkennen, dass das Rotationselement 3.2a mit einem oberen Abschnitt in Anlage mit dem Vorsprung 1.3a.iv gelangt, wodurch die Rotationsbewegung des Sperrhebels 3 begrenzt ist. In den Figuren 9 und 10 ist auch zu erkennen, dass die Krümmung des Rotationselements 3.2a in seinem unteren Abschnitt, mit dem das Rotationselement 3.2a auf dem Boden 1.3a.i aufliegt, bezüglich des Auflagepunktes asymmetrisch ausgebildet ist.

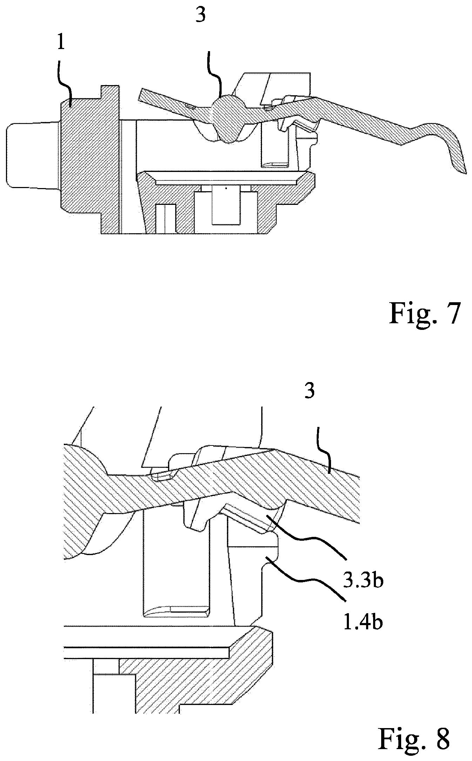

Aus den in den Figuren 7 und 8 dargestellten Querschnittansichten geht noch hervor, dass in der rotierten Stellung des Sperrhebels 3 der Sperrhebel 3 mit der Ausstülpung 3.3b an dem an dem Trägerteil 1 ausgebildeten Anschlagselement 1.4b anliegt, wodurch ebenfalls die Rotationsbewegung des Sperrhebels 3 begrenzt ist.

### Bezugszeichenliste

- 1: Trägerteil
- 1.1: Aufstandsfläche
- 1.2a: Auflagestelle
- 1.2b: Auflagestelle
- 1.3a: Ausnehmung
- 1.3b: Ausnehmung
- 1.3a.i: Boden
- 1.3a.ii: Decke
- 1.3a.iii: Öffnung
- 1.3a.iv: Vorsprung
- 1.4a: Anschlagselement
- 1.4b: Anschlagselement
- 2: Sensormasse
- 3: Sperrhebel
- 3.1: Eingriffsspitze
- 3.2a: Rotationselement
- 3.2b: Rotationselement
- 3.3a: Ausstülpung
- 3.3b: Ausstülpung

## Patentansprüche

1. Fahrzeugsensitiver Sensor für einen selbstsperrenden Gurtaufroller, umfassend
- ein Trägerteil (1),
- eine auf einer Aufstandsfläche (1.1) des Trägerteils (1) stehend angeordnete und zu dem Trägerteil (1) kippbare Sensormasse (2) und
- einen mit der Sensormasse (2) gekoppelten, eine Eingriffsspitze (3.1) aufweisenden Sperrhebel (3), wobei der Sperrhebel (2) wenigstens zwei Rotationselemente (3.2a, 3.2b) zur Ausbildung einer Rotationsachse für den Sperrhebel (3) aufweist und wobei jedes Rotationselement (3.2a, 3.2b) auf einer zugehörigen Auflagestelle (1.2a, 1.2b) des Trägerteils (4) aufliegt,
**dadurch gekennzeichnet, dass**
das Trägerteil (1) eine Ausnehmung (1.3a, 1.3b) für jedes Rotationselement (3.2a, 3.2b) aufweist und wobei ein Boden (1.3a.i) der Ausnehmung (1.3a) eine Auflagestelle (1.2a) ausbildet, wobei der Boden (1.3a.i) von einer Decke (1.3a.ii) der jeweiligen Ausnehmung (1.3a) überdeckt ist.

2. Sensor nach Anspruch 1, wobei jede Ausnehmung (1.3a, 1.3b) eine insbesondere vordere Öffnung (1.3a.iii) aufweist, durch die ein Rotationselement (3.2a) in die Ausnehmung (1.3a) einbringbar ist.

3. Sensor nach einem der vorhergehenden Ansprüche, wobei die Decke (1.3a.ii) der Ausnehmung (1.3a) einen nach unten vorstehenden Vorsprung (1.3a.iv) aufweist, der eine Rotationsbewegung des Rotationselements (3.2a) begrenzt.

4. Sensor nach einem der vorhergehenden Ansprüche, wobei sich die Öffnung (1.3a.iii) zum Boden (1.3a.i) der Ausnehmung (1.3a) hin verengt.

5. Sensor nach Anspruch 4, wobei ein Übergang von der sich verjüngenden Öffnung (1.3a.ii) zum Boden (1.3a.i) der Ausnehmung (1.3a) in einer Einbringungsrichtung des Rotationselements (3.2a) hinter dem Vorsprung (1.3a.iv) angeordnet ist.

6. Sensor nach einem der vorhergehenden Ansprüche, wobei jeder Ausnehmung (1.3a, 1.3b) ein nach vorne vorspringendes Anschlagselement (1.4a, 1.4b) zugeordnet ist, welches eine Rotationsbewegung des Sperrhebels (3) begrenzt.

7. Sensor nach Anspruch 6, wobei der Sperrhebel (3) in Verbindungsabschnitten zwischen den Rotationselementen und der Eingriffsspitze (3.1) Ausstülpungen (3.3a, 3.3b) aufweist, die den Anschlagselementen (1.4a, 1.4b) zugeordnet sind.

8. Sensor nach einem der vorhergehenden Ansprüche, wobei jedes Rotationselement (3.2a, 3.2b) auf seiner Unterseite eine asymmetrische Krümmung ausgehend von einem durch einen Normalstellung definierten Minimum aufweist.

9. Sensor nach einem der vorhergehenden Ansprüche, wobei die Rotationselemente (3.2a, 3.2b) höher als tief sind und insbesondere eine ovalförmige Außenumfangsgestaltung aufweisen.

10. Gurtaufroller mit einem Sensor nach einem der vorhergehenden Ansprüche.

## Claims

1. Vehicle-sensitive sensor for a self-locking belt retractor, comprising
- a support part (1),
- a sensor mass (2) which is arranged vertically on a contact surface (1.1) of the support part (1) and can tilt relative to the support part (1) and
- a locking lever (3) which is coupled to the sensor mass (2) and has an engagement tip (3.1), the locking lever (2) having at least two rotation elements (3.2a, 3.2b) for forming an axis of rotation for the locking lever (3), and
each rotation element (3.2a, 3.2b) resting on an associated support point (1.2a, 1.2b) of the support part (4),
**characterized in that**
the support part (1) comprises a recess (1.3a, 1.3b) for each rotation element (3.2a, 3.2b), and a base (1.3a.i) of the recess (1.3a) forming a support point (1.2a), the base (1.3a.i) being covered by a cover (1.3a.ii) of the corresponding recess (1.3a).

2. Sensor according to claim 1, wherein each recess (1.3a, 1.3b) has an in particular front opening (1.3a.iii) by means of which a rotation element (3.2a) can be inserted into the recess (1.3a).

3. Sensor according to any of the preceding claims, wherein the cover (1.3a.ii) of the recess (1.3a) comprises a downwardly projecting projection (1.3a.iv) which limits a rotational movement of the rotation element (3.2a).

4. Sensor according to any of the preceding claims, wherein the opening (1.3a.iii) narrows towards the base (1.3a.i) of the recess (1.3a).

5. Sensor according to claim 4, wherein a transition from the tapering opening (1.3a.ii) to the base (1.3a.i) of the recess (1.3a) is located behind the projection (1.3a.iv) in an insertion direction of the rotation element (3.2a).

6. Sensor according to any of the preceding claims, wherein a forwardly projecting stop element (1.4a, 1.4b) is assigned to each recess (1.3a, 1.3b) and limits a rotational movement of the locking lever (3).

7. Sensor according to claim 6, wherein the locking lever (3) comprises protrusions (3.3a, 3.3b) in connecting portions between the rotation elements and the engagement tip (3.1), which protrusions are assigned to the stop elements (1.4a, 1.4b).

8. Sensor according to any of the preceding claims, wherein each rotation element (3.2a, 3.2b) has an asymmetric curvature on its underside starting from a minimum defined by a normal position.

9. Sensor according to any of the preceding claims, wherein the rotation elements (3.2a, 3.2b) are taller than they are deep and have an oval outer circumferential shape.

10. Belt retractor comprising a sensor according to any of the preceding claims.

## Revendications

1. Détecteur sensible au véhicule pour un enrouleur de ceinture à blocage automatique, comprenant
- une partie formant support (1),
- une masse de détection (2) disposée debout sur une surface d'appui (1.1) de la partie formant support (1) et pouvant basculer par rapport à la partie formant support (1), et
- un levier de blocage (3) accouplé à la masse de détection (2) et présentant une pointe de mise en prise (3.1), dans lequel le levier de blocage (2) présente au moins deux éléments de rotation (3.2a, 3.2b) pour la formation d'un axe de rotation pour le levier de blocage (3), et dans lequel
chaque élément de rotation (3.2a, 3.2b) repose sur un point de repos (1.2a, 1.2b) correspondant de la partie formant support (4),
**caractérisé en ce que**
la partie formant support (1) présente un évidement (1.3a, 1.3b) pour chaque élément de rotation (3.2a, 3.2b) et dans lequel un fond (1.3a.i) de l'évidement (1.3a) forme un point de repos (1.2a), dans lequel le fond (1.3a.i) est recouvert par un couvercle (1.3a.ii) de l'évidement (1.3a) respectif.

2. Détecteur selon la revendication 1, dans lequel chaque évidement (1.3a, 1.3b) présente une ouverture (1.3a.iii), en particulier avant, à travers laquelle un élément de rotation (3.2a) peut être introduit dans l'évidement (1.3a).

3. Détecteur selon l'une des revendications précédentes, dans lequel le couvercle (1.3a.ii) de l'évidement (1.3a) présente une saillie (1.3a.iv) en saillie vers le bas, laquelle limite un mouvement de rotation de l'élément de rotation (3.2a).

4. Détecteur selon l'une des revendications précédentes, dans lequel l'ouverture (1.3a.iii) se rétrécit vers le fond (1.3a.i) de l'évidement (1.3a).

5. Détecteur selon la revendication 4, dans lequel une transition entre l'ouverture (1.3a.ii) se rétrécissant et le fond (1.3a.i) de l'évidement (1.3a) est disposée derrière la saillie (1.3a.iv) dans une direction d'insertion de l'élément de rotation (3.2a).

6. Détecteur selon l'une des revendications précédentes, dans lequel à chaque évidement (1.3a, 1.3b) est associé un élément de butée (1.4a, 1.4b) en saillie vers l'avant, lequel élément de butée limite un mouvement de rotation du levier de blocage (3).

7. Détecteur selon la revendication 6, dans lequel le levier de blocage (3) présente des protubérances (3.3a, 3.3b) dans des sections de liaison entre les éléments de rotation et la pointe de mise en prise (3.1), lesquelles protubérances sont associées aux éléments de butée (1.4a, 1.4b).

8. Détecteur selon l'une des revendications précédentes, dans lequel chaque élément de rotation (3.2a, 3.2b) présente, sur sa face inférieure, une courbure asymétrique à partir d'un minimum défini par une position normale.

9. Détecteur selon l'une des revendications précédentes, dans lequel les éléments de rotation (3.2a, 3.2b) sont plus hauts que profonds et présentent en particulier une configuration circonférentielle extérieure de forme ovale.

10. Enrouleur de ceinture comportant un détecteur selon l'une des revendications précédentes.
